# EUROPÄISCHE PATENTANMELDUNG

(11) **EP 0 706 304 A1**
(43) Veröffentlichungstag der Anmeldung: **10.04.1996**
(21) Anmeldenummer: 95810634.6
(22) Anmeldetag: 09.10.1995
(51) Int. Cl.: H05B 6/12, H05B 6/36

(54) **Kochgerät**

(30) Priorität: 09.10.1994 CH 3037/94
(71) Anmelder: Menu-System Ernst Wüst, CH-9014 St. Gallen (CH)
(72) Erfinder: Wuest, Ernst, CH-9030 Abtwil (CH)
(74) Vertreter: Kulhavy, Sava, Dipl.-Ing.

(57) **Zusammenfassung**

Das Kochgerät weist eine induktive Heizvorrichtung (2) auf, welche sich unter einer viereckigen Kochplatte (1) befindet. Zwischen der Kochplatte (1) und der Heizvorrichtung (2) befindet sich eine Abschirmvorrichtung (3). Die Heizvorrichtung (2) umfasst zwei Heizelemente (7,8) mit im wesentlichen spiralförmigen Induktoren, deren Windungen geradlinig verlaufende Abschnitte aufweisen. Diese Heizvorrichtung (2) ist über Zuführleitungen (11,12) an eine Stromquelle angeschlossen. Diese Stromquelle und die Heizelemente (7,8) sind derart ausgeführt, dass nicht nur die Randbereiche der Kochplatte (1) sondern auch die Bereiche zwischen den Heizelementen (7,8) für Kochzwecke ausgenützt werden können.

## Beschreibung

Die vorliegende Erfindung betrifft ein Kochgerät mit einer induktiven Heizvorrichtung, welche sich unter einer viereckigen Kochplatte befindet.

Solche Kochgeräte sind an sich bekannt und sie dienen in der Regel als Bestandteil von Kochherden für den Haushalt. Ein solches vorbekanntes Kochgerät weist als Kochplatte eine quadratische Glaskeramikplatte auf, an deren Unterseite sich die Heizvorrichtung befindet. Diese Heizvorrichtung umfasst meistens vier Heizelemente, von welchen je zwei auf einer der Diagonalen der Glaskeramikplatte derart angeordnet sind, dass das Zentrum des jeweiligen Heizelementes auf der jeweiligen Hälfte der Diagonale der Kochplatte liegt.

Das jeweilige Heizelement ist bei dem vorbekannten Kochgerät durch einen Scheibeninduktor aus einer Hochfrequenzlitze gebildet. Die einzelnen Windungen der Scheibenspule verlaufen spiralförmig, wobei der Durchmesser der im wesentlichen kreisförmigen Windungen gegen den Randbereich der Scheibenspule hin zunimmt. Zwischen den benachbarten und im wesentlichen kreisförmigen Heizlementen sowie zwischen dem jeweiligen Heizelement und dem geradlinig verlaufenden Rand der Glaskeramikplatte gibt es somit Bereiche, welche, weil die Glaskeramik nur wenig wärmeleitend ist, praktisch kalt bleiben. Folglich gleicht die Anzahl der zum Kochen gleichzeitig verwendbaren Töpfe oder dergleichen in der Regel der Anzahl der Heizelemente des Kochgerätes.

In Grossküchen ist es von Vorteil, wenn möglichst viele Töpfe oder dergleichen auf der Kochplatte gleichzeitig stehen können. Wegen der dargelegten Einschränkung der Anzahl der Kochstellen beim induktiven Kochgerät für den Haushalt ist ein solches Kochgerät für die Grossküchen ungeeignet und deswegen benützt man in den Grossküchen Kochplatten mit Widerstands- oder Infrarotbeheizung. Dies hat zur Folge, dass solche Kocheräte einerseits eine sehr grosse Hitze entwickeln und dass sie andererseits zudem noch viel elektrische Energie nutzlos verbrauchen.

Die Aufgabe der vorliegenden Erfindung ist, ein Kochgerät mit induktiven Heizelementen anzugeben, welches auch in Grossküchen verwendbar ist.

Diese Aufgabe wird beim Kochgerät der eingangs genannten Gattung so gelöst, wie dies im kennzeichnenden Teil des Patentanspruchs definiert ist.

Nachstehend werden Ausführungsformen der vorliegenden Erfindung anhand der beiliegenden Zeichnungen näher erläutert. Es zeigt:
Fig. 1 schematisch und in einer Seitenansicht das vorliegende, Kochgerät,
Fig. 2 in einer Draufsicht einen Ausschnitt aus einer Heizvorrichtung des Kochgerätes gemäss Fig. 1,
Fig. 3 in einer Draufsicht die Heizvorrichtung des Kochgerätes gemäss Fig. 1,
Fig. 4 in einer Draufsicht eine Abschirmplatte des Kochgerätes gemäss Fig. 1 und
Fig. 5 ein Schaltschema eines Stromgenerators für das Kochgerät gemäss Fig. 1.

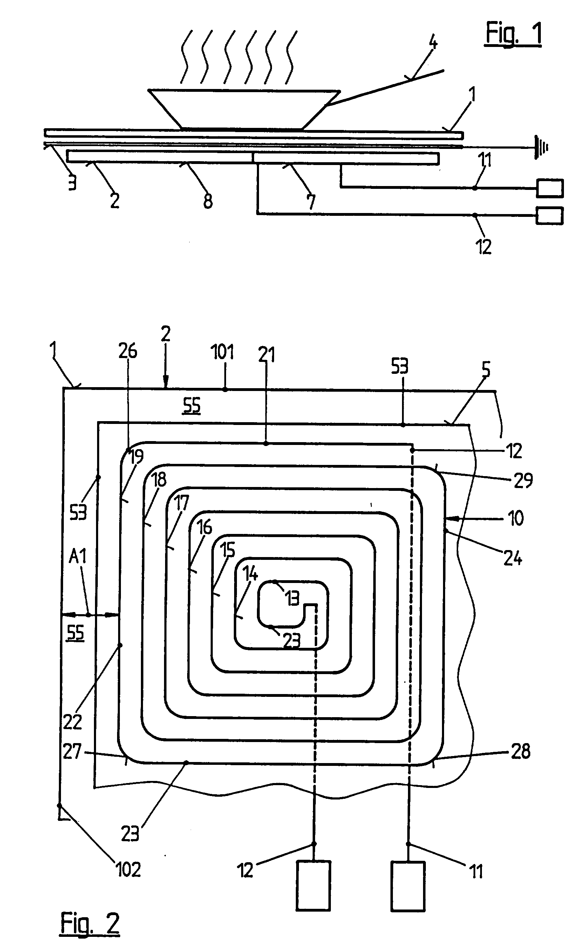

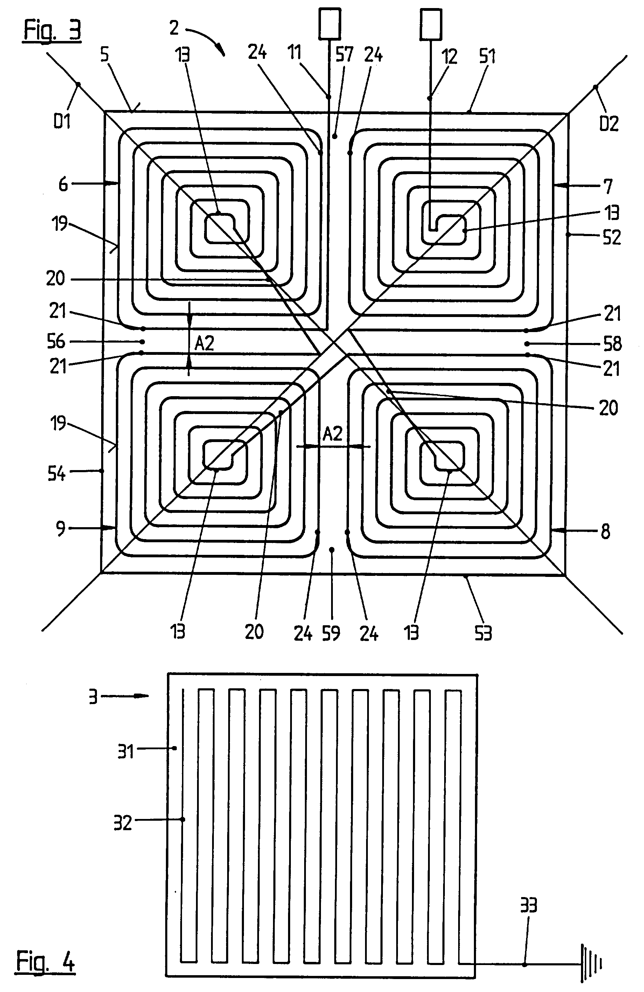

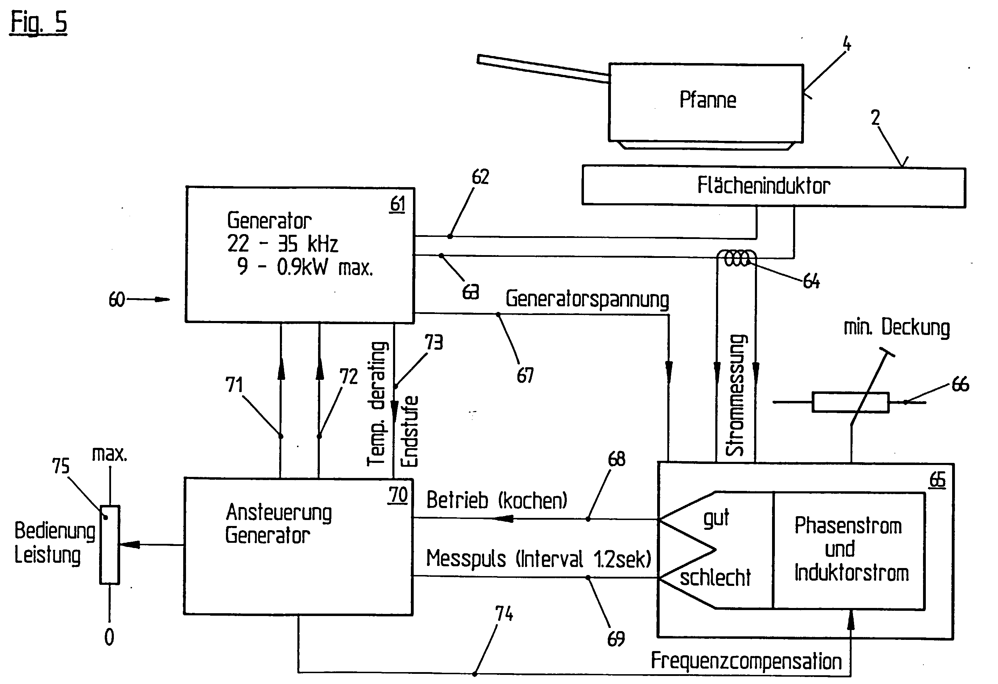

Das vorliegende Kochgerät ist in Fig. 1 schematisch und in einer Seitenansicht dargestellt. Dieses Kochgerät weist eine Kochplatte 1 aus einem wärmeisolierenden, elektrisch isolierenden sowie hitzebeständigen Material auf, welche vorteilhaft aus Glaskeramik ist. Diese Kochplatte 1 ist zweckmässigerweise viereckig und im dargestellten Fall hat diese Platte 1 einen quadratischen Grundriss, wie dies aus Fig. 3 ersichtlich ist. In Fig. 2 ist nur eine der Eckpartien dieser Kochplatte 1 dargestellt, und zwar mit ihren Seiten bzw. Seitenkanten 101 und 102, welche rechtwinklig zueinander stehen. Das Kochgerät weist ferner eine induktive Heizvorrichtung 2 auf, welche sich unter der Glaskeramikplatte 1 befindet. Zwischen der Kochplatte 1 und der Heizvorrichtung 2 befindet sich eine Abschirmvorrichtung 3, welche in Fig. 4 in einer Draufsicht dargestellt ist. Auf der Deckplatte 1 stehend ist eine Pfanne 4 angedeutet. Fig. 5 zeigt ein Schaltschema eines Stromgenerators 60 für das Kochgerät gemäss Fig. 1.

Die Heizvorrichtung 2 weist eine Grundplatte 5 auf, welche aus einem elektrisch isolierenden und wärmebeständigen Material ist. Im dargestellten Fall hat diese Grundplatte 5 einen quadratischen Grundriss und sie hat somit Seiten bzw. Seitenkanten 51, 52, 53 und 54. Diese Seitenkanten 51 bis 54 der Grundplatte 5 verlaufen rechtwinklig zueinander und zugleich parallel zu den Seiten 101 bzw. 103 der Kochplatte 1. An der Grundplatte 5 sind Heizelemente 6, 7, 8 und 9 (Fig. 3) angebracht. Von diesen Heizelementen 6 bis 9 sind je zwei auf einer der Diagonalen D1 bzw. D2 der Glaskeramikplatte derart angeordnet, dass deren Zentren auf der jeweiligen Diagonale D1 bzw. D2 liegen.

Das jeweilige Heizlement 6 bis 9 umfasst einen Induktor 10 (Fig. 2), welcher als eine Heizquelle dient und welcher derart ausgeführt ist, dass auch die Randbereiche 55 der Glaskeramikplatte 5 für Kochzwecke ausgenützt werden können. Diese Heizvorrichtung 2 ist über Leiter 11 und 12 an eine Quelle 60 von hochfrequentem Strom angeschlossen (Fig. 5). Das in Fig. 2 dargestellte Heizelement ist, obwohl allein abgebildet, mit den Anschlussleitern 11 und 12 versehen, weil ein solches Heizelement unter Umständen auch allein zum Kochen verwendbar ist.

Der Induktor 10 (Fig. 2) ist als ein Flächeninduktor bzw. eine Scheibenspule ausgeführt. Dies bedeutet, dass die einzelnen Windungen 13, 14, 15, 16, 17, 18 und 19 der Wicklung dieses Induktors 10 in derselben Ebene liegen. Im in Fig. 2 dargestellten Fall öffnet sich die Wicklung 10 im Uhrzeigersinn. Die Wicklung 10 ist zweckmässigerweise aus einer Hochfrequenzlitze ausgeführt und die Windungen 13 bis 19 dieser Wicklung 10 sind auf der zur Kochplatte 1 gewandten grossflächigen Seiten der Grundplatte 5 angebracht und mit Hilfe eines geeigneten Kitts (nicht dargestellt) an Ort und Stelle gehalten. Die Anschlussleiter 11 und 12 stellen Fortsetzungen des Anfanges bzw. des Endes der Wicklung 10 dar und sie werden durch entsprechende Bohrungen (nicht argestellt) in der Grundplatte 5 an die gegenüberliegende Seite dieser Platte 5 geführt. Damit wird verhindert, dass die Anschlussleiter 11 und 12, welche quer über die Windungen 13 bis 19 verlaufen, Kurzschlüsse zwischen den Induktorwindungen 13 bis 19 verursachen.

Die jeweilige Windung 13 bis 19 des Flächeninduktors 10 weist geradlinig verlaufende Abschnitte 21, 22, 23 und 24 (Fig. 2) auf. Diese geradlinigen Windungsabschnitte 21 bis 24 sind derart angeordnet, dass sie parallel zu der einen der Seiten 51 bzw. 53 oder zu der anderen der Seite 52 bzw. 54 der Grundplatte 5 verlaufen. Die geradlinigen Windungsabschnitte 21 bis 24 sind jedoch zugleich derart angeordnet, dass sie parallel zu der einen der Seiten 101 bzw. zu der anderen der Seite 102 der Kochplatte 1 verlaufen.

Zwischen jeweils zwei geradlinigen Windungsabschnitten 21 bis 24 ist ein stark gekrümmter Windungsabschnitt 26 bzw. 27 bzw. 28 bzw. 29 zwischengeschaltet, welcher einen Bogen mit einem Zentriwinkel von 90 Grad darstellt. Durch diese gekrümmten Abschnitte 26 bis 29 sind die geradlinigen Abschnitte 21 bis 24 hintereinander bzw. in Serie geschaltet, sodass sie zusammen mit den gekrümmten Abschnitten 26 bis 29 jeweils eine der Windungen 13 bis 19 des Induktors 10 darstellen.

Aus der vorstehenden Darlegung geht hervor, dass auch die aussen liegenden geradlinigen Abschnitte 21 bzw. 22 der äusseren Windung 19 des Induktors 10 parallel zur nächstliegenden Seitenkante 101 bzw. 102 der Kochplatte 1 verlaufen. Der Abstand A1 zwischen dem jeweiligen geradlinigen Windungsabschnitt 21 bzw. 22 und der dazu parallel liegenden Seitenkante 101 bzw. 102 der Kochplatte 1 beträgt 5mm und vorteilhaft 15 mm.

Gemäss Fig. 3 sind vier Heizvorrichtungen 6 bis 9 auf der Grundplatte 5 angebracht. Die Induktoren 10 der Heizelemente 6 bis 9 sind auf der Grundplatte 5 so angeordnet bzw. orientiert, dass die geradlinigen Abschnitte 21 bis 24 der Induktoren 10 in den benachbarten Heizelementen 6 bis 9 zueinander parallel bzw. rechtwinklig stehen. Folglich verlaufen auch die an der Aussenseite des jeweiligen Induktors 10 liegenden und dem benachbarten Induktor 10 zugewandten geradlinigen Windungsabschnitte 21 bzw. 24 parallel zueinander.

Die Heizvorrichtung 2 ist so ausgeführt, dass auch die sich zwischen den benachbarten Heizelementen 6 bis 9 dieser Vorrichtung 2 befindlichen Bereiche 56, 57, 58 und 59 (Fig. 3) der Grundplatte 5 und somit auch die entsprechenden und darüber liegenden Bereiche der Kochplatte 1 für Kochzwecke ausgenützt werden können. Zu diesem Zweck ist der Abstand A2 zwischen den äusseren geradlinigen Abschnitten 21 bzw. 24 der benachbarten Wicklungen 10 nur etwa zweimal so gross wie der Abstand zwischen den benachbarten Windungen, z.B. 18 und 19, eines dieser Heizelemente 6 bis 9. Dieser Abstand A2 kann 10mm betragen oder dieser Abstand A2 kann auch grösser als 10mm sein.

Damit eine solche Anordnung von Heizelementen 6 bis 9 trotz den so nahe aneinander liegenden äusseren Windungen 21 bzw. 24 der benachbarten Heizelemente 6 bis 9 funktioniren kann, muss ein bestimmter Wickelsinn der Induktoren 10 der Heizelemente 6 bis 9 sowie ein ganz bestimmter Anschluss der Induktoren 10 dieser Heizvorrichtung 2 an die Stromquelle eingehalten werden. Die Anschlussleiter 11 und 12 sind an die zwei oben abgebildeten Heizelemente 6 und 7 angeschlossen. Der erste Anschlussleiter 11 ist an die aussen am Rande liegende Windung 19 des Induktors 10 des ersten Heizelementes 6 angeschlossen. Der zweite Anschlussleiter 12 ist an die mittig liegende Windung 13 des Induktors 10 des zweiten Heizelementes 7 angeschlossen. Dabei öffnet sich die Spirale des Induktors 10 des ersten Heizelementes 6 im Gegenuhrzeigersinn. Die Spirale des Induktors 10 des zweiten Heizelementes 7 öffent sich im Uhrzeigersinn.

Die mittige Windung 13 des ersten Heizelementes 6 ist mit Hilfe eines ersten Verbindungsleiters 20 mit der äusseren Windung 19 des darunter abgebildeten, vierten Heizelementes 9 verbunden. Die mittige Windung 13 dieses vierten Heizelementes 9 ist mit Hilfe eines weiteren Verbindungsleiters 20 an die äussere Windung 19 des rechts daneben liegenden, dritten Heizelementes 8 verbunden. Und die mittige Windung 13 des Induktors 10 des dritten Heizelementes 8 ist mit Hilfe eines noch weiteren Verbindungsleiters 20 an die äussere Windung 19 des zweiten Heizelementes 7 angeschlossen. Die Spirale des Induktors 10 des dritten Heizelementes 8 öffent sich im Gegenuhrzeigersinn, währed die Spirale des Induktors 10 des vierten Heizelementes 9 sich im Uhrzeigersinn öffnet.

Eine solche Beschaltung der Heizelemente 6 bis 9 der Heizvorrichtung 2 hat zur Folge, dass der Strom in den äusseren, geradlinigen und parallel zueinander liegenden Abschnitten 21 bzw. 24 der benachbarten Heizelemente 6 bis 9 im jeweiligen Zeitpunkt in derselben Richtung fliesst. In einem solchen Fall beeinflussen sich die äusseren und parallel zueinander liegenden Leiter 21 bzw. 24 der benachbarten Induktoren 10 nicht ungünstig und deswegen können diese Leiter 21 und 24 bzw. die betreffenden Heizelemente 6 bis 9 so nahe aneinander angeordnet sein, wie dies vorstehend angegeben ist.

Die vorliegende Heizvorrichtung kann jedoch auch nur zwei der beschriebenen Heizelemente aufweisen. Zur Erläuterung dieses Falles kann auf die ersten zwei Heizelemente 6 und 7 der Vorrichtung 2 gemäss Fig. 3 Bezug genommen werden. In einem solchen Fall ist der erste Verbindungsleiter 20 von der mittigen Windung 13 des ersten Heizelementes 6 zur äusseren Windung 19 des zweiten Heizelementes 7 geführt. Eine solche Beschaltung stellt sicher, dass Strom in den aussen liegenden geradlinigen Windungsabschnitten 24 der benachbarten Heizelemente 6 und 7 im jeweiligen Zeitpunkt jeweils in derselben Richtung fliesst.

Die bereits erwähnte Abschirmvorrichtung 3 verhindert, dass elektrische Entladungen zwischen den auf der Kochplatte 1 nahe aneinander aufgestellten Kochtöpfen 4 entstehen. Die Abschirmvorrichtung 3 (Fig. 4) weist eine Trägerplatte 31 auf, an welcher ein Leiter 32 angeordnet ist. Dieser Leiter 32 ist derart an der Trägerplatte 31 verlegt, dass möglichst die ganze Fläche der Trägerplatte 31 durch den Leiter 32 bedeckt ist und dass dieser Leiter 32 keine geschlossene Schleife bildet. Im dargestellten Fall verläuft der Leiter 32 auf der Trägerplatte 31 meanderförmig und ein Erdungsleiter 33 ist an nur eines der Enden des Abschirmleiters 32 angeschlossen.

In Fig. 5 ist ein Blockschaltbild der Stromquelle 60 wiedergegeben. Diese Stromquelle 60 umfasst einen Generator 61 von Impulsen, welche über Leiter 62 und 63 dem Flächeninduktor bzw. der Heizvorrichtung 2 zugeführt werden. Dieser Generator 61 ist von einer an sich bekannten Art und bei diesem Generator 61 lässt sich sowohl die durch diesen erzeugte Frequenz als auch die Leistung der Impulse steuern. Die erzeugten Frequenzen können im Bereich zwischen 22 und 35 kHz und die Leistung kann zwischen 9W und 0.9kW liegen. Einem der Zuführleiter 63 ist ein Stromwandler 64 zugeordnet, welcher an die ersten Eingänge einer Phasenmessvorrichtung 65 angeschlossen ist. Einem weiteren Eingang dieser Phasenmessvorrichtung 65 wird die Spannung vom Stromgenerator 61 mit Hilfe einer Leitung 67 direkt zugeführt. Zur Steuerung der Arbeitsweise der Phasenmessvorrichtung 65 ist ein Einstellelement 66 an diese Vorrichtung 65 angeschlossen. Mit Hilfe dieses ersten Einstellelementes 66 lässt sich die gewünschte minimale Deckung des Flächeninduktors 2 durch die Pfanne 4 im voraus einstellen.

Der Ausgang der Phasenmessvorrichtung 65 ist über Leitungen 68 und 69 an eine Ansteuerungsvorrichtung 70 für den Generator 61 angeschlossen. Diese Vorrichtung 70 ist über weitere Leiter 71 und 72 mit dem Generator 61 verbunden. Eine weitere Leitung 73 führt vom Generator 61 zur Ansteuerungsvorrichtung 70 zurück. Zur Frequenzkompensation ist die Ansteuerungsvorrichtung 70 an die Phasenmessvorrichtung 65 über eine weitere Leitung 74 zurückgekoppelt. Zur Einstellung der gewünschten Leistung ist die Ansteuerungsvorrichtung 70 mit einem zweiten Einstellelement 75 versehen.

Das vorliegende Kochgerät stellt ein Grosskochfeld mit stufenlos schaltbarer Leistung dar. Dies erlaubt, die induktive Leistung auf den einzelnen Bedarf abzustimmen. Es ist möglich, die Leistung sogar auf bloss 9W pro cm2 zu reduzieren, sodass auch kleinste Töpfe ohne weiteres für Kochzwecke eingesetzt werden können. Bei einem solchen Kochgerät kann die zur Verfügung stehende Arbeitsfläche und Energie optimal ausgenützt werden. Zweckmässigerweise kann dieses Kochgerät in Standgeräten oder in grossen Kochherden eingebaut werden.

Beim vorliegenden Grosskochfeld können nicht nur die Randbereiche zwischen den einzelnen Induktoren und dem anliegenden Rand der Kochplatte sondern auch die Räume zwischen den einzelnen Induktoren dieses Kochfeldes für Kochzwecke ausgenützt werden. Dank dem beschriebenen elektronischen Teil des vorliegenden Kochgerätes kann dieses Gerät auch dann problemlos arbeiten, wenn ein Topf zugleich die Randpartien der benachbarten Induktoren überdeckt. Dieses Kochfeld arbeitet somit übergangslos und die zum Kochen zur Verfügung stehende Energie ist über die gesamte Fläche der Kochplatte praktisch gleichmässig verteilt. Man kann mit einer Anzahl von Töpfen gleichzeitig arbeiten, wobei diese Anzahl grösser sein kann als die Anzahl der Induktoren des Kochfeldes.

## Patentansprüche

1. Kochgerät mit einer induktiven Heizvorrichtung (2), welche sich unter einer viereckigen Kochplatte (1) befindet, dadurch gekennzeichnet, dass die Heizvorrichtung (2) zumindest ein Heizelement (6 bis 9) aufweist, welches derart ausgeführt ist, dass auch die Randbereiche (55) der Kochplatte (1) für Kochzwecke verwendbar sind.

2. Kochgerät nach Anspruch 1, dadurch gekennzeichnet, dass das Heizelement (6 bis 9) einen Flächeninduktor (10) mit im wesentlichen spiralförmigen Windungen umfasst, dass die jeweilige Windung (13 bis 19) einer solchen Spule (10) praktisch geradlinig verlaufende und hintereinander geschaltete Abschnitte (21 bis 24) aufweist und dass der jeweilige geradlinig verlaufende Windungsabschnitt parallel zu einer der Seiten (101 bzw. 102) der Kochplatte (1) verläuft.

3. Kochgerät nach Anspruch 1, dadurch gekennzeichnet, dass die Heizvorrichtung (2) zumindest zwei Heizelemente (6,7) aufweist und dass diese Heizelemente derart ausgeführt und angeordnet sind, dass auch der sich zwischen diesen benachbarten Heizelementen (6,7) befindliche Bereich (57) der Kochplatte (1) für Kochzwecke verwendbar ist.

4. Kochgerät nach Anspruch 3, dadurch gekennzeichnet, dass die geradlinig verlaufende Abschnitte (21 bzw. 24) der aussen liegenden Windungen (19) der benachbarten Heizelemente parallel zueinander verlaufen und dass der Abstand A2 zwischen den äusseren geradlinig verlaufenden Abschnitten 21 bzw. 24) der benachbarten Wicklungen (6 bzw. 7 bzw. 8 bzw. 9) zweimal so gross ist wie der Abstand zwischen den benachbarten Windungen (z.B. 18 und 19) eines der Heizelemente.

5. Kochgerät nach Anspruch 3, dadurch gekennzeichnet, dass die Induktoren (10) der Heizelemente (6 bis 9) in Serie geschaltet und an eine Stromquelle (60) angeschlossen sind und dass der Wicklungssinn der Induktoren (10) derart ist, dass der Strom in den geradlinigen und parallel zueinander verlaufenden Abschnitten (21 bzw. 24) der äusseren Windungen (19) der benachbarten Heizelemente (6 bis 9) in gleicher Richtung fliesst.

6. Kochgerät nach Anspruch 5, dadurch gekennzeichnet, dass ein erster Anschlussleiter (11) an die aussen am Rande liegende Windung (19) des Induktors (10) eines ersten Heizelementes (6) angeschlossen ist, dass ein zweiter Anschlussleiter (12) an die mittig liegende Windung (13) des Induktors (10) eines zweiten Heizelementes (7) angeschlossen ist, dass der spiralförmige Induktor (10) des ersten Heizelementes (6) sich im Gegenuhrzeigersinn und der Induktor (10) des zweiten Heizelementes (7) sich im Uhrzeigersinn öffnet.

7. Kochgerät nach Anspruch 6, welches zwei Heizelemente (6,7) aufweist, dadurch gekennzeichnet, dass die mittige Windung (13) des ersten Heizelementes (6) mit Hilfe eines ersten Verbindungsleiters (20) mit der äusseren Windung (19) des zweiten Heizelementes (9) verbunden ist.

8. Kochgerät nach Anspruch 6, welches vier und in einem Viereck untergebrachte Heizelemente (6 bis 9) aufweist, dadurch gekennzeichnet, dass die mittige Windung (13) des ersten Heizelementes (6) mit Hilfe eines ersten Verbindungsleiters (20) mit der äusseren Windung (19) des vierten Heizelementes (9) verbunden ist, dass die mittige Windung (13) dieses vierten Heizelementes (9) mit Hilfe eines weiteren Verbindungsleiters (20) an die äussere Windung (19) des dritten Heizelementes (8) verbunden ist, dass die mittige Windung (13) des Induktors (10) des dritten Heizelementes (8) mit Hilfe eines noch weiteren Verbindungsleiters (20) an die äussere Windung (19) des zweiten Heizelementes (7) angeschlossen ist, dass die Spirale des Induktors (10) des dritten Heizelementes (8) sich im Gegenuhrzeigersinn öffnet und dass der Induktor (10) des vierten Heizelementes (9) sich im Uhrzeigersinn öffnet.

9. Kochgerät nach Anspruch 1, dadurch gekennzeichnet, dass eine Stromquelle (60) vorgesehen ist, an welche die Heizvorrichtung (2) abgeschlossen ist, dass diese Stromquelle (60) einen Generator (61) von Stromimpulsen aufweist, welcher über Leiter (62, 63) an die Heizvorrichtung (2) angeschlossen ist, dass dieser Generator 61 derart ist, dass sich sowohl die erzeugte Frequenz als auch die Leistung der Impulse steuern lässt, dass einem der Zuführleiter (63) ein Stromwandler (64) zugeordnet ist, welcher an erste Eingänge einer Phasenmessvorrichtung (65) angeschlossen ist, dass ein weiterer Eingang dieser Phasenmessvorrichtung (65) über eine Leitung (67) an den Stromgenerator (61) direkt angeschlossen ist, dass ein Einstellelement (66) zur Steuerung der Arbeitsweise der Phasenmessvorrichtung (65) an diese angeschlossen ist, dass der Ausgang der Phasenmessvorrichtung (65) über Leitungen (68,69) an eine Ansteuerungsvorrichtung (70) für den Generator (61) angeschlossen ist, dass diese Vorrichtung (70) über weitere Leiter (71,72) mit dem Generator (61) verbunden ist, dass eine weitere Leitung (73) vom Generator (61) zur Ansteuerungsvorrichtung (70) zurückführt, dass die Ansteuerungsvorrichtung (70) an die Phasenmessvorrichtung (65) über eine weitere Leitung (74) zurückgekoppelt ist und dass zur Einstellung der gewünschten Leistung die Ansteuerungsvorrichtung (70) mit einem zweiten Einstellelement (75) versehen ist.

10. Kochgerät nach Anspruch 1, dadurch gekennzeichnet, dass eine Abschirmvorrichtung (3) sich zwischen der Kochplatte (1) und der Heizvorrichtung (2) befindet, dass diese Vorrichtung (3) einen geerdeten Leiter (32) aufweist, welcher in bzw. auf einer Trägerplatte (31) derart verlegt ist, dass möglichst die ganze Fläche der Trägerplatte (31) durch den Leiter bedeckt ist, und dass dieser Leiter keine geschlossene Schleife bildet, wobei der Leiter (32) auf der Trägerplatte (31) meanderförmig verlegt sein kann.
